Europäisches Patentamt

**European Patent Office** (11) Publication number: **0 082 589**

Office européen des brevets **B1**

(12) **EUROPEAN PATENT SPECIFICATION**

(45) Date of publication of patent specification: **03.09.86** (51) Int. Cl.⁴: **F 16 F 15/12,** F 16 D 13/68, F 16 H 45/02

(21) Application number: **82305794.8**

(22) Date of filing: **01.11.82**

(54) **Series damper dynamic lag system.**

(30) Priority: **18.12.81 US 332031**

(43) Date of publication of application:
**29.06.83 Bulletin 83/26**

(45) Publication of the grant of the patent:
**03.09.86 Bulletin 86/36**

(84) Designated Contracting States:
**DE FR GB IT SE**

(56) References cited:
**FR-A-1 454 232**
**FR-A-2 381 206**
**FR-A-2 439 336**
**US-A-2 826 902**

(73) Proprietor: **BORG-WARNER CORPORATION**
**200 South Michigan Avenue**
**Chicago Illinois 60604 (US)**

(72) Inventor: **Lamarche, Paul Emile**
**47791 Burton**
**Utica Michigan 48087 (US)**

(74) Representative: **Allden, Thomas Stanley et al**
**A.A. THORNTON & CO. Northumberland House**
**303-306 High Holborn**
**London WC1V 7LE (GB)**

EP 0 082 589 B1

Courier Press, Leamington Spa, England.

## Description

This invention relates to a torsional vibration damper assembly for use in a vehicle clutch, such as a clutch for a manual transmission or a lock-up clutch in a torque converter for an automatic transmission.

In our US—A—4,279,132 corresponding to FR—A—2 439 336 we have disclosed a vibration damper assembly of the kind described above which comprises a hub member for operative connection to a torque output means such as a transmission input shaft forming the driven member and having a plurality of circumferentially equally spaced radial arms, spring separators positioned between adjacent hub arms, compression spring sets interposed between the hub arms and spring separators, and a pair of retainer plates having peripheral flanges secured to a torque input means forming the driving member and substantially enclosing the hub member, spring separators and spring sets, the retainer plates having axially aligned elongate arcuate slots separated by inwardly offset drive straps and accommodating the spring sets, each hub arm having a notch formed in its outer edge.

The aforesaid vibration damper assembly serves to neutralize any torsional vibrations emanating from the vehicle engine. However, there exists a need to reduce the effects of rapid positive and negative torques occurring in the clutch system, otherwise referred to as tip-in and tip-out effects. The rapid positive and negative torques occur when the operator suddenly lifts his foot from the accelerator pedal to cause a rapid deceleration or suddenly presses down on the pedal for rapid acceleration. These sudden changes cause an undesirable jerking sensation.

In accordance with the present invention as claimed, there is provided a torsional vibration damper assembly for use in a vehicle clutch to transmit torque between driving and driven members, the damper assembly comprising a hub member for operative connection to the driven member and having at least two circumferentially equally spaced radial arms each having a notch formed in its outer edge, at least one spring separator sliding independently of the hub member between adjacent hub arms, compression spring sets interposed between the hub arms and spring separators, a pair of retainer plates having peripheral flanges for securement to the driving. member and substantially enclosing the hub member, spring separators and spring sets, the retainer plates having axially aligned elongated arcuate slots separated by inwardly offset drive straps and accommodating the spring sets, and a friction lag plate received in each notch, the notches in the hub arms and the friction lag plates having complementary camming surfaces diverging outwardly from one another to urge the lag plates outwardly into sliding engagement with the retainer plates upon relative rotation between the driving member and the driven member during rotation of the hub member.

The invention has the advantage that the friction lag plates in the notches formed in the outer edges of the hub arms and which are cammed outwardly upon rotation of the hub member into sliding engagement with the retainer plates act as a self-energising lag system serving to smooth out the effects of the rapid positive and negative torques occurring upon sudden operation of the accelerator pedal.

US—A—2,826,902 discloses a vibration damper assembly of a construction generally similar to that outlined above in relation to US—A—4,279,132 except that it is deficient of the spring separators but incorporates friction lag units each consisting of a brake shoe positioned in a notch in the peripheral portion of an annular flange of the hub and spring pressed radially outwardly to engage the retainer plates assembly. Unlike the present invention, those friction lag units are permanently maintained in drag contact with the retainer plates assembly, whereas the lag system we have devised is self-energising and operative only in response to sudden changes in acceleration to damp out the rapid torques induced in the clutch system at those times.

In order that the invention may be well understood there will now be described one embodiment given by way of example, with reference to the accompanying drawings, in which:

Figure 1 is a rear elevational view with portions broken away of a torsional vibration damper assembly incorporating a built-in self-energizing lag system;

Figure 2 is a cross sectional view of the same damper assembly taken on the irregular line 2—2 of Figure 1;

Figure 3 is a rear elevational view of a hub member for the same damper assembly;

Figure 4 is an elevational view of a friction lag plate for the same lag system; and

Figure 5 is an edge view of the same friction lag plate taken from the right hand side of Figure 4.

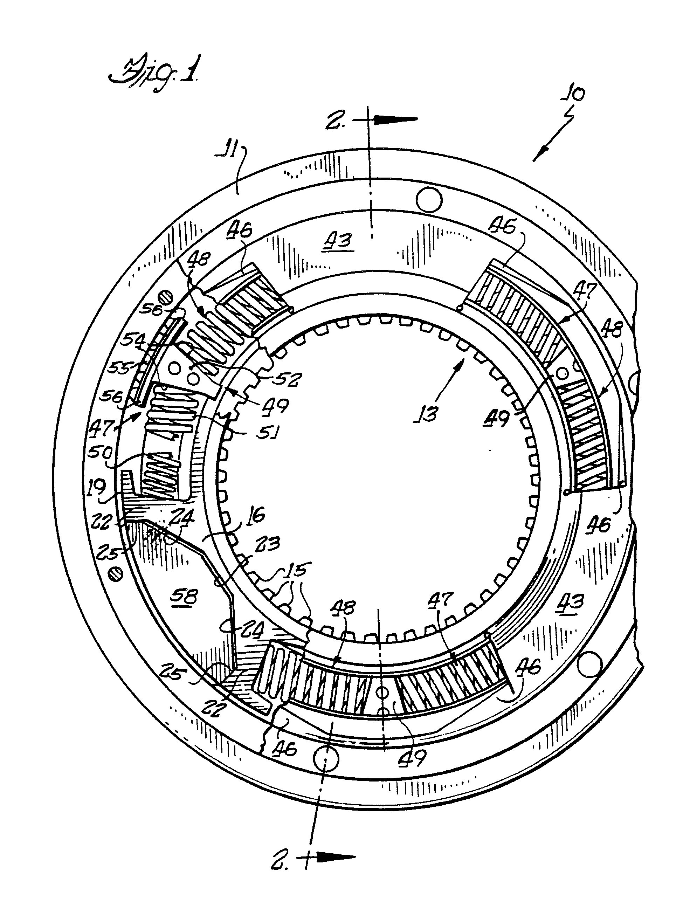

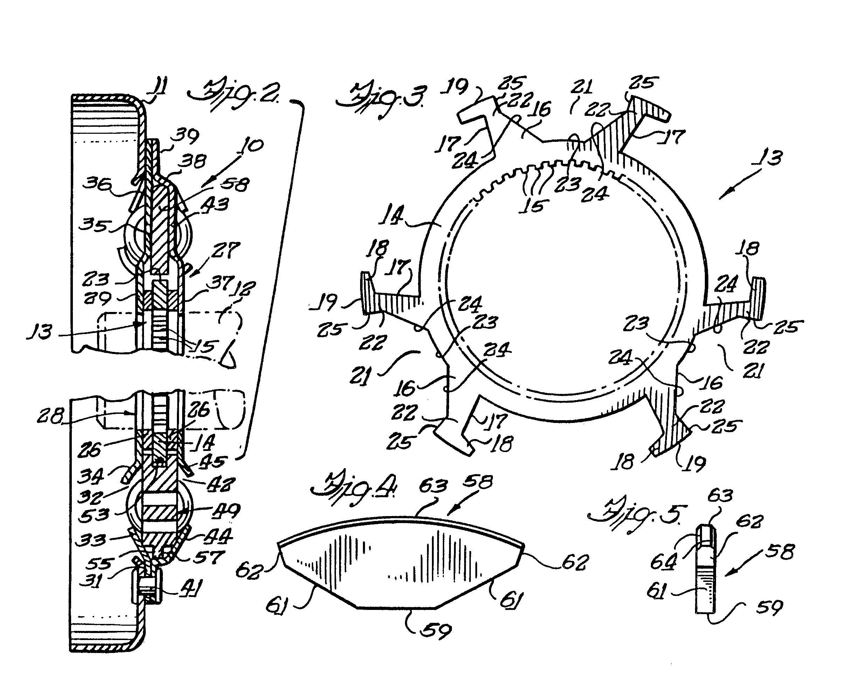

Referring first to Figures 1 and 2, there is shown an extended travel vibration damper assembly 10 for connection to a torque input means or attaching ring 11, which may be connected to a friction plate for a clutch in a standard manual transmission or to a piston plate located within the housing of a torque converter for an automatic transmission, (not shown), and acting to drive a torque output means 12, such as a transmission input shaft or the turbine hub of the turbine for a torque converter. The damper assembly includes a hub 13 (Figure 3) in the form of an annular ring 14 having internal splines or teeth 15 for a driving connection with a shaft or turbine hub.

The hub has three circumferentially equally spaced radially extending arms 16, each arm having outwardly diverging sides 17 terminating in circumferentially oppositely extending ears 18 joined by an arcuate outer edge 19. Formed in the edge 19 is a generally V-shaped notch 21 dividing the arm into a pair of fingers 22, each notch having a flat central base 23, outwardly diverging camming surfaces 24, 24 and then slightly diverging end walls 25, 25. On each side of the hub ring 14 are spacer rings 26, 26 to locate the hub in a vibration damper housing 27.

The housing includes a front retainer plate 28 and a rear retainer plate 37. The front retainer plate 28 is formed as an annular plate or ring 29 having a slightly rearwardly offset peripheral flange 31 and three elongated arcuate slots or openings 32 defined by outer inclined lips 33 and inner curved lips 34 with slightly rearwardly offset drive straps 35 separating the slots 32, each strap being in the same plane with the flange 31 and axially aligned with a hub arm 16. Each outer lip 33 adjacent the strap 35 is formed with a reentry ramp (not shown).

The rear retainer plate 37 is in the form of an annular ring terminating at its outer edge in a generally axially extending wall 38 which in turn terminates in a peripheral flange 39 abutting the flange 31; the flanges being suitably secured to the attaching ring 11, such as by rivets 41. The plate 37 has three elongated arcuate slots or openings 42 axially aligned with slots 32 and separated by inwardly offset drive straps 43, each slot being defined by an outer inclined lip 44 and an inner curved lip 45; the outer lips having reentry ramps 46 leading into the drive straps 43.

Located within each pair of axially aligned arcuate slots 32, 42 are two spring sets 47, 48 with a sliding spring separator 49 between the two sets. Each spring set consists of one or more concentric compression springs, such as inner spring 50 and outer spring 51, and abuts an edge or side 17 of a hub arm 16. The sliding spring separator 49 includes a wedge-shaped body 52 with inwardly converging edges 54, 54 terminating in an inner end having a notch 53 (Figure 2) and in a narrow arcuate outer edge 55 extending beyond the edges 54 as ears 56, 56. The retainer plates 28, 37 form a circumferential channel 57 in which ride the arcuate edge 55 of each divider, the arcuate edge 19 of each hub arm 16 and the arcuate edges 63 of friction lag plates 58.

Each friction lag plate 58 is a flat plate of a shape complementary to a hub arm notch 21 into which the lag plate is received; the plate having a flat base 59, outwardly diverging camming surfaces 61, slightly outwardly diverging sides 62 (see Figure 4), and an arcuate outer edge 63 which is chamfered along the sides as at 64 (Figure 5).

In operation, the three pairs or groups of spring sets 47, 48 act in parallel with the spring sets in each group acting in series when torque is applied to the clutch and to the vibration damper 10 through the attaching ring 11. Upon application of torque, the housing 27 is rotated and the aligned pairs of drive straps 35, 43 act on the spring sets 47 to compress the springs in each set against the sliding spring separators 49. Movement of the separators results in compression of spring sets 48 which act on the radial arms 16 to rotate the hub 13 and the torque output means 12. Upon relative rotation of the hub, the friction lag plates 58 slide in the channel 57 while being pulled or pushed by the fingers 22 of the radial arms 16.

The camming surfaces 24 in each notch cooperate with the camming surfaces 61 on each lag plate to urge the plates outwardly to increase frictional contact with the housing 27, and the mass of the lag plates is acted upon by centrifugal force of the rotating hub to enhance the outward force on the lag plates. Thus, the frictional contact of the leg plates against the housing 27 offers a resistance to movement of the lag plates, and thus the hub, that is proportional to the centrifugal force resulting from vehicle engine rpm. This resistance to movement acts to smooth out any rapid changes in positive and/or negative torques.

**Claims**

1. A torsional vibration damper assembly (10) for use in a vehicle clutch to transmit torque between driving (11) and driven (12) members, said damper assembly (10) comprising a hub member (13) for operative connection to the driven member (12) and having at least two circumferentially equally spaced radial arms (16) each having a notch (21) formed in its outer edge (19), at least one spring separator (49) sliding independently of said hub member (13) between adjacent hub arms (16), compression spring sets (47, 48) interposed between said hub arms (16) and spring separators (49), a pair of retainer plates (28, 37) having peripheral flanges (31, 39) for securement to the driving member (11) and substantially enclosing said hub member (13), spring separators (49) and spring sets (47, 48), said retainer plates (28, 37) having axially aligned elongated arcuate slots (32, 42) separated by inwardly offset drive straps (35, 43) and accommodating said spring sets (47, 48), and a friction lag plate (58) received in each notch (21), said notches (21) in said hub arms (16) and said friction lag plates (58) having complementary camming surfaces (24, 61) diverging outwardly from one another to urge said lag plates (58) outwardly into sliding engagement with said retainer plates (28, 37) upon relative rotation between the driving member (11) and driven member (12) driving rotation of said hub member (13).

2. A vibration damper assembly as claimed in claim 1, wherein said retainer plates (28, 37) form a peripheral channel (57) in which the outer edges (19, 63, 55) of said hub arms (16), friction lag plates (58) and spring separators (49) travel.

3. A vibration damper assembly as claimed in claim 2, in which the camming surfaces (61 and 24) on each lag plate (58) and in each notch (21) and the centrifugal force of rotation of said hub member (13) act to urge each lag plate (58) radially outwardly into frictional engagement in said peripheral channel (57) of said retainer plates (28, 37) to offer resistance to rotation of said hub member (13) relative to said retainer plates (28, 37).

4. A vibration damper assembly as claimed in claim 2 or claim 3, wherein each said friction lag plate (58) has an arcuate outer edge (63) received in said peripheral channel (57) to slide therein, said arcuate outer edge (63) being chamfered on the opposite surfaces thereof.

5. A vibration damper assembly as claimed in any of claims 2 to 4, wherein said spring separators (49) are wedge-shaped with an outer narrow arcuate edge (55) received in said peripheral channel (57) to slide therein.

6. A vibration damper assembly as claimed in any of the preceding claims, wherein said hub member (13) comprises an annular ring (14), and each spring separator (49) has a notch (53) in its inner end receiving the outer edge of the annular hub ring (14) therein.

7. A vibration damper assembly as claimed in any of the preceding claims, wherein said hub arms (16) and notches (21) are relatively wide with each notch (21) including a flat base portion (23), a pair of outwardly diverging camming surfaces (24), and a pair of slightly outwardly diverging side edges (25).

8. A vibration damper assembly as claimed in any of the preceding claims, wherein each notch (21) divides said hub arm (16) into a pair of hub fingers (22) acting on said friction lag plate (58).

9. A vibration damper assembly as claimed in any of the preceding claims, wherein said hub member (13) has three equally spaced radial arms (16), one said spring separator (49) being positioned between each adjacent pair of hub arms (16), and three pairs of said spring sets (47, 48) being received between adjacent hub arms (16) with a spring separator (49) between the spring sets (47, 48) of each pair.

10. A vibration damper assembly as claimed in claim 9, wherein each pair of spring sets (47, 48) forms a group with the groups acting in parallel, and the spring sets (47, 48) in each group acting in series.

**Revendications**

1. Amortisseur de vibrations de torsion (10) destiné à être utilisé dans un embrayage de véhicule pour transmettre le couple entre des éléments moteur (11) et mené (12), l'amortisseur (10) comportant un élément de moyeu (13) pour connexion opérationnelle à l'élément mené (12) et comportant au moins deux bras radiaux (16) espacés circonférentiellement de la même distance, ayant chacun une encoche (21) formée dans leur bord extérieur (19), au moins un séparateur (19) de ressort coulissant indépendamment de l'élément de moyeu (13) entre des bras de moyeu contigus (16), des jeux de ressorts de compression (47, 48) interposés entre les bras de moyeu (16) et les séparateurs de ressort (49), une paire de plaques de retenue (28, 37) ayant des rebords périphériques (31, 39) pour fixation à l'élément moteur (11) et renfermant sensiblement l'élément de moyeu (13), les séparateurs de ressort (49) et les jeux de ressorts (47, 48), les plaques de retenue (28, 37) ayant des fentes en forme d'arc allongées, alignées axialement (32, 42) séparées par des bandes d'entraînement décalées vers l'intérieur (35, 43) et recevant les jeux de ressorts (47, 48) et une plaque à retard par friction (58) reçue dans chaque encoche (21), les encoches des bras de moyeu (16) et les plaques à retard de friction (58) ayant des surfaces à came complémentaires (24, 61) divergeant vers l'extérieur l'une par rapport à l'autre afin de solliciter les plaques à retard (58) dans la direction de l'extérieur pour les mettre en contact coulissant avec les plaques de retenue (28, 37) lors de la rotation relative entre l'élément moteur (11) et l'élément mené (12) pendant la rotation de l'élément de moyeu (13).

2. Amortisseur de vibrations selon la revendication 1, dans lequel les plaques de retenue (28, 37) forment un canal périphérique (57) dans lequel se déplacent les bords extérieurs (19, 63, 55) des bras de moyeu (16), les plaques de retard à friction (58) et les séparateurs de ressort (49).

3. Amortisseur de vibrations selon la revendication 2 dans lequel les surfaces à came (61 et 24) de chaque plaque à retard (58) et dans chaque encoche (21) et la force centrifuge de rotation de l'élément de moyeu (13) agissent pour solliciter chaque plaque à retard (58) dans la direction radiale de l'extérieur pour la mettre en contact par frottement avec le canal périphérique (57) des plaques de retenue (28, 37) afin d'opposer une résistance à la rotation de l'élément de moyeu (13) par rapport aux plaques de retenue (28, 37).

4. Amortisseur de vibrations selon la revendication 2 ou la revendication 3, dans lequel chaque plaque à retard par friction (58) comporte un bord extérieur en forme d'arc (63) reçu dans le canal périphérique (57) de manière à y coulisser, le bord extérieur en forme d'arc (63) étant chanfreiné sur ses surfaces opposées.

5. Amortisseur de vibrations selon l'une quelconque des revendications 2 à 4, dans lequel les séparateurs de ressort (49) ont la forme d'une cale avec un bord extérieur étroit en forme d'arc (55) reçu dans le canal périphérique (57) de manière à y coulisser.

6. Amortisseur de vibrations selon l'une quelconque des revendications précédentes, dans lequel l'élément de moyeu (13) comporte une bague annulaire (14) et chaque séparateur de ressort (49) comporte une encoche (53) dans son extrémité intérieure qui reçoit le bord extérieur de la bague annulaire (14) de moyeu.

7. Amortisseur de vibrations selon l'une quelconque des revendications précédentes, dans lequel les bras de moyeu (16) et les encoches (21) sont relativement larges, avec chaque encoche (21) comportant une partie de base plate (23), une paire de surfaces à came (24) divergeant vers l'extérieur, et une paire de bords latéraux (25) divergeant légèrement vers l'extérieur.

8. Amortisseur de vibrations selon l'une quelconque des revendications précédentes, dans lequel chaque encoche (21) divise le bras de moyeu (16) en une paire de doigts de moyeu (22) agissant sur la plaque à retard par friction (58).

9. Amortisseur de vibrations selon l'une quelconque des revendications précédentes, dans lequel l'élément de moyeu (13) comporte trois bras radiaux (16) espacés de la même distance, un séparateur de ressort (49) étant placé entre chaque paire contiguë de bras de moyeu (16), et trois paires de jeux de ressorts (47, 48) étant reçues entre des bras contigus de moyeu (16) avec un séparateur de ressort (49) entre les jeux de ressorts (47, 48) de chaque paire.

10. Amortisseur de vibrations selon la revendication 9, dans lequel chaque paire de jeux de ressorts (47, 48) forme un groupe avec les groupes agissant en parallèle, et les jeux de ressorts (47, 48) de chaque groupe agissant en série.

**Patentansprüche**

1. Torsionsschwingungsdämpfer (10) für eine Fahrzeugkupplung zur Übertragung eines Drehmomentes zwischen einem treibenden (11) und einem getriebenen (12) Teil, wobei der Dämpfer (10) versehen ist mit einem Nabenkörper (13), der mit dem getriebenen Teil (12) funktionsmäßig verbindbar ist und mindestens zwei in Umfangsrichtung gleichmäßig beabstandete radiale Arme (16) aufweist, von denen jeder eine Nut (21) in seinem Außenrand (19) besitzt, mindestens einem Federteiler (49), der unabhängig von dem Nabenkörper (13) zwischen benachbarten Nabenarmen (16) gleitet, Druckfedersätzen (47, 48), die zwischen den Nabenarmen (16) und den Federteilern (49) angeordnet sind, einem Paar Halteplatten (28, 37), die mit Umfangsflanschen (31, 39) zur Befestigung am getriebenen Teil (11) versehen sind und im wesentlichen den Nabenkörper (13), die Federteiler (49) und die Federsätze (47, 48) umschließen, wobei die Halteplatten (28, 37) axial ausgerichtete, längliche, gekrümmte Schlitze (32, 47) besitzen, die durch nach innen versetzte Mitnehmerstreifen (35, 43) getrennt sind und die Federsätze (47, 48) aufnehmen, und einer Reibverzögerungsplatte (58) in jeder Nut (21), wobei die Nuten (21) in den Nabenarmen (16) und die Reibverzögerungsplatten (58) komplementäre Nockenflächen (24, 61) aufweisen, die bezüglich einander nach außen divergieren, um die Verzögerungsplatten (58) bei einer Relativdrehung des treibenden Teils (11) und des getriebenen Teils (12) während einer Drehung des Nabenkörpers (13) nach außen in gleitende Anlage an die Halteplatten (28, 37) zu drücken.

2. Schwingungsdämpfer nach Anspruch 1, bei dem die Halteplatten (28, 37) einen Umfangskanal (57) bilden, in dem die Außenränder (19, 63, 55) der Nabenarme (16), die Reibverzögerungsplatten (58) und die Federteiler (59) laufen.

3. Schwingungsdämpfer nach Anspruch 2, bei dem die Nockenflächen (61 und 24) jeder Verzögerungsplatte (58) und jeder Nut (21) und die Zentrifugalkraft aufgrund der Drehung des Nabenkörpers (13) so wirken, daß sie jede Verzögerungsplatte (58) radial nach außen in Reibanlage mit dem Umfangskanal (57) der Halteplatten (28, 37) drücken, um der Drehung des Nabenkörpers (13) bezüglich der Halteplatten (28, 37) einen Widerstand entgegenzusetzen.

4. Schwingungsdämpfer nach Anspruch 2 oder 3, bei dem jede Reibverzögerungsplatte (58) einen gekrümmten Außenrand (63) aufweist, der in dem Umfangskanal (57) gleitend aufgenommen wird, wobei der gekrümmte Außenrand (63) an seinen entgegengesetzten Oberflächen angefast ist.

5. Schwingungsdämpfer nach einem der Ansprüche 2—4, bei dem die Federteiler (49) keilförmig ausgebildet sind, wobei ein äußerer schmaler gekrümmter Rand (55) gleitend in dem Umfangskanal (57) aufgenommen wird.

6. Schwingungsdämpfer nach einem der vorhergehenden Ansprüche, bei dem der Nabenkörper (13) aus einem Ring (14) besteht und jeder Federteiler (49) an seinem inneren Ende eine Nut (53) besitzt, die den Außenrand des Nabenringes (14) aufnimmt.

7. Schwingungsdämpfer nach einem der vorhergehenden Ansprüche, bei dem die Nabenarme (16) und die Nuten (21) relativ breit sind, wobei jede Nut (21) einen ebenen Bodenabschnitt (23), zwei nach außen divergierende Nockenflächen (24) und zwei geringfügig nach außen divergierende Seitenränder (25) aufweist.

8. Schwingungsdämpfer nach einem der vorhergehenden Ansprüche, bei dem jede Nut (21) den Nabenarm (16) in zwei Nabenfinger (22) unterteilt, die auf die Reibverzögerungsplatte (58) einwirken.

9. Schwingungsdämpfer nach einem der vorhergehenden Ansprüche, bei dem der Nabenkörper (13) drei gleichmäßig beabstandete radiale Arme (16) besitzt, wobei ein Federteiler (49) zwischen jedem benachbarten Paar von Nabenarmen (16) angeordnet ist und drei Paare der Federsätze (47, 48) zwischen benachbarten Nabenarmen (16) angeordnet sind, wobei ein Federteiler (49) zwischen den Federsätzen (47, 48) jeden Paares vorgesehen ist.

10. Schwingungsdämpfer nach Anspruch 9, bei dem jedes Paar Federsätze (47, 48) eine Gruppe bildet, wobei die Gruppen in Parallelschaltung und die Federsätze (47, 48) in jeder Gruppe in Reihenschaltung wirken.

Fig. 1

Fig. 2

Fig. 3

Fig. 4

Fig. 5

0 082 589